# EUROPÄISCHE PATENTANMELDUNG

(11) **EP 0 892 541 A2**
(43) Veröffentlichungstag der Anmeldung: **20.01.1999**
(21) Anmeldenummer: 98107896.7
(22) Anmeldetag: 30.04.1998
(51) Int. Cl.: H04M 11/00, H04N 1/00

(54) **Büro- oder Haushaltsgerät**

(30) Priorität: 19.07.1997 DE 19731079
(71) Anmelder: Deutsche Telekom AG, 53113 Bonn (DE)
(72) Erfinder: Lorenz, Manfred, Dipl.-Ing., 53129 Bonn (DE)

(57) **Zusammenfassung**

Die Erfindung betrifft ein elektrisches Gerät (1), vorzugsweise Büro- oder Haushaltsgerät mit einer Steuereinrichtung (4) zur Überwachung und/oder Fernsteuerung des Büro- oder Haushaltsgeräts. Es ist vorgesehen, daß dem Büro- oder Haushaltsgerät ein Kommunikationsmodul (5) zur Sprachübertragung zugeordnet ist, das zumindest eine Sprech- und Höreinrichtung (7) aufweist.

## Beschreibung

Die Erfindung betrifft ein elektrisches Gerät, vorzugsweise Büro- oder Haushaltsgerät gemäß Oberbegriff des Anspruchs 1.

Elektrische Geräte der eingangs genannten Art sind bekannt. Sie weisen eine Steuereinrichtung auf, beispielsweise eine Steuerelektronik, mit deren Hilfe unterschiedliche Betriebszustände erfaßt und ausgewertet werden. Beispielsweise enthält die Steuereinrichtung eine Überwachungsfunktion, wodurch bei einem fehlerhaften Betriebszustand ein Abschalten des Geräts möglich ist. Zusätzlich oder alternativ kann ein fehlerhafter Betriebszustand an einem Anzeigegerät dargestellt werden. Dieses Anzeigegerät kann beispielsweise an einer zentralen Erfassungsstelle aufgestellt sein. Dadurch ist es möglich, daß eine einzige Person mehrere Geräte überwachen und bei einer entsprechenden Fehlermeldung eine Reparatur einleiten kann.

Ferner ist es beispielsweise bei Bürogeräten, insbesondere Kopiergeräten bekannt, eine sogenannte Fernwartung durchzuführen. Das heißt, eine in dem Kopiergerät angebrachte Steuereinrichtung meldet vorgebbare Betriebszustände an eine Leitstelle, wodurch von der Leitstelle aus über Datenfernübertragung ein Wartungsvorgang, beispielsweise ein Kopiertrommel-Reinigungsvorgang ausgelöst werden kann.

Im weiteren Stand der Technik ist es bekannt, mehrere Büro- oder Haushaltsgeräte in einer Büroeinheit beziehungsweise Wohneinheit zu vernetzen, so daß sämtliche Geräte mit einer zentralen Steuer- und Überwachungseinrichtung ferngesteuert werden können.

Sind größere Wartungsarbeiten oder Reparaturen notwendig, so werden diese von einem Servicetechniker vor Ort erledigt. Treten jedoch schwer zu lösende Probleme auf oder benötigt der Servicetechniker tiefere Fachkenntnisse, so wünscht er eine Unterstützung durch die Servicezentrale. Ist jedoch eine Kommunikationseinrichtung in näherer Umgebung nicht vorhanden, so kann möglicherweise der Techniker die Reparatur nicht ausführen oder aber er muß ständig zwischen dem zu reparierenden Gerät und einem Telefon hin und her laufen.

Es ist daher Aufgabe der Erfindung, ein elektrische Gerät, vorzugsweise Büro- oder Haushaltsgerät anzugeben, das diesen Nachteil nicht aufweist.

Diese Aufgabe wird durch ein elektrisches Gerät, vorzugsweise Büro- oder Haushaltsgerät gelöst, die die Merkmale des Anspruchs 1 aufweisen. Dadurch, daß das Büro- oder Haushaltsgerät ein Kommunikationsmodul zur Sprachübertragung aufweist, das zumindest eine Sprech- und Höreinrichtung umfaßt, kann unmittelbar vom Gerät aus eine Sprachübertragung erfolgen. Dadurch ist es nicht nur möglich, Unterstützung bei einer Wartung oder Reparatur eines Geräts zu erhalten, sondern es ist auch möglich, rückzufragen, ob ein eingeschaltetes Gerät, dessen Wirkung an einem anderen Ort eintritt, einwandfrei arbeitet. Beispielsweise kann dies eine Heizanlage sein, die sich im Keller eines Wohnhauses befindet, wobei die zu beheizenden Heizkörper in den über dem Keller liegenden Wohneinheiten angeordnet sind. Weiterhin ist es möglich, beispielsweise beim Befüllen einer Waschmaschine über das Kommunikationsmodul Informationen zu erhalten, welches Waschprogramm gewählt werden soll oder welche Wäschestücke zusammen gewaschen werden können.

In einer Weiterbildung der Erfindung ist vorgesehen, daß das Kommunikationsmodul einer Steuereinrichtung zugeordnet ist, die der Überwachung beziehungsweise der Fernsteuerung des Büro- oder Haushaltsgeräts dient. Dadurch wird es in vorteilhafter Weise möglich, daß ein und dieselbe Kommunikationsverbindung genutzt werden kann. Beispielsweise ist dies die Stromleitung innerhalb eines Hauses.

Dadurch, daß das Kommunikationsmodul -in einer Weiterbildung der Erfindung- eine Wähleinrichtung mit Wahltastatur aufweist, ist es möglich, daß unterschiedliche Geräte innerhalb eines Büros oder eines Hauses angesprochen werden können. Zusätzlich kann dem Kommunikationsmodul eine Rufsignalisierungseinrichtung zugeordnet werden, so daß in vorteilhafter Weise beispielsweise durch Klingelzeichen ein Kommunikationswunsch angezeigt werden kann.

In einer vorteilhaften Ausgestaltung der Erfindung ist vorgesehen, daß als Wahltastatur eine bereits im elektrischen Gerät vorhandene Eingabetastatur dient. Beispielsweise weist ein Kopiergerät eine nummerische Tastatur auf, die in jedem Fall die Nummerntasten 0 bis 9 umfaßt. Durch eine Umschalteinrichtung ist es möglich, entweder das Kopiergerät zu bedienen oder ein anderes Gerät anzuwählen.

In einer besonders vorteilhaften Ausführungsform ist vorgesehen, daß die Steuereinrichtung mit einer übergeordneten zentralen Steuereinheit in Kommunikationsverbindung steht. Dadurch ist es einerseits möglich, daß Gerät ferngesteuert zu betreiben, andererseits ist es auch denkbar, die zentrale Steuereinheit als Überwachungsgerät vorzusehen. Zusätzlich kann die zentrale Steuereinheit Kommunikationswünsche innerhalb eines Hauses oder eines Büros entsprechend der angewählten Nummer weiterleiten.

Wird die Kommunikationsverbindung durch das Stromnetz in einem Haus oder in einem Büro sichergestellt, kann mit einer zentralen Steuereinheit eine Kommunikationsverbindung zwischen zumindest zwei Geraten, die an unterschiedlichen Stromkreisen innerhalb des Hauses angeschlossen sind, hergestellt werden.

Alternativ kann jedoch vorgesehen sein, daß die Kommunikationsverbindung durch eine Funkverbindung realisiert wird.

In einer vorteilhaften Weiterbildung der Erfindung ist vorgesehen, daß die Steuereinrichtung und/oder die zentrale Steuereinheit an ein Telekommunikationsnetz angeschlossen sind. Das Telekommunikationsnetz kann entweder ein drahtloses und/oder ein leitergebundes Netz sein. Dadurch ist es möglich, auch Kommunikationsverbindungen von dem jeweiligen Büro- oder Haushaltsgerät nach außen herzustellen.

Weitere Ausgestaltungen ergeben sich aus den übrigen Unteransprüchen.

Die Erfindung wird nun mit Bezug auf die Zeichnung naher erläutert. Es zeigen:
- Figur 1: ein Blockschaltbild eines Bürogeräts mit Steuereinrichtung und Kommunikationsmodul und
- Figur 2: ein Blockschaltbild mehrerer Büro- und Haushaltsgeräte in Kommunikationsverbindung sowie eine zentrale Steuereinheit.

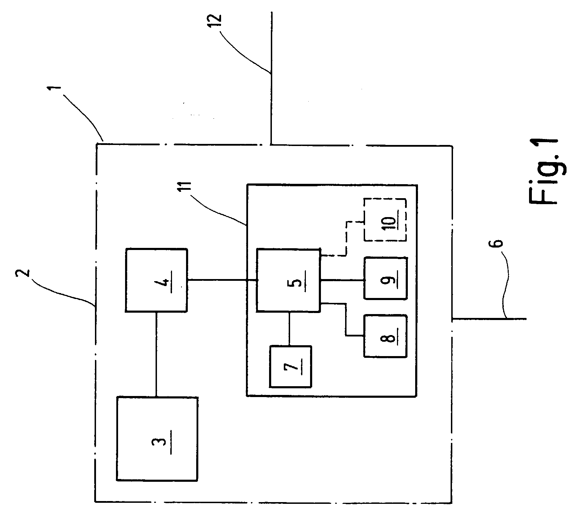

Die Figur 1 zeigt strichpunktiert dargestellt ein Bürogerät 1, das hier beispielhaft als Kopiergerät 2 ausgebildet ist. Das Kopiergerät 2 umfaßt eine Kopiereinheit 3, die zur Vervielfältigung von Texten oder Zeichnungen dient, eine Steuereinrichtung 4, die Betriebszustande erfaßt und vorzugsweise auswerten kann und ein Kommunikationsmodul 5.

Die Steuereinrichtung 4 erfaßt -wie bereits erwähnt- Betriebszustände der Kopiereinheit 3, wobei bei fehlerhaften Betriebszuständen die Kopiereinheit 3 abgeschaltet und der Ausfall mittels einer separaten Anzeige (nicht dargestellt) optisch und/oder akustisch signalisiert wird. Die Steuereinrichtung 4 ist über eine Netzanschlußleitung 6, die zur Stromversorgung des Bürögeräts 1 dient, also auch die Steuereinrichtung 4 versorgt, mit der Anzeige verbunden, so daß eine Kommunikationsverbindung hergestellt ist. Eine Kommunikation kann in beiden Richtungen erfolgen, das heißt, die Steuereinrichtung 4 übermittelt Daten an die Anzeige, andererseits können auch Daten beziehungsweise Steueranweisungen an die Steuereinrichtung 4 übermittelt werden.

Der Steuereinrichtung 4 ist das Kommunikationsmodul 5 zugeordnet, so daß es auch über die Netzanschlußleitung 6 Daten empfangen, beziehungsweise senden kann. Insbesondere dient das Kommunikationsmodul 5 der Sprachübertragung. Dazu weist es eine Sprech- und Höreinrichtung 7, eine Wähleinrichtung 8 mit Tastatur, die auch die bereits vorhandene Tastatur des Bürogeräts sein kann, und eine Rufsignalisierungseinrichtung 9 auf. Optional zur Sprech- und Höreinrichtung 7 kann dem Kommunikationsmodul 5 eine Bildübertragungseinrichtung 10 (gestrichelt dargestellt) zugeordnet sein. Das Kommunikationsmodul 5, die Sprech- und Höreinrichtung 7, die Wähleinrichtung 8, die Rufsignalisierungseinrichtung 9 und vorzugsweise die Bildübertragungseinrichtung 10 bilden eine Kommunikationseinrichtung 11.

Im Falle einer notwendigen Reparatur des Kopiergeräts 2 kann ein Servicetechniker, der am Kopiergerät 2 arbeitet über die Kommunikationseinrichtung 11 mit seiner Servicezentrale in Verbindung treten. Dies kann entweder über die Netzanschlußleitung 6 erfolgen, wenn nämlich die Servicestelle im selben Haus eingerichtet ist. Hierzu wird der Netzspannung das modulierte Sprachsignal aufgeprägt. Es ist überdies auch denkbar, einen Anschluß 12 an ein Telekommunikationsnetz (nicht dargestellt) vorzusehen. Alternativ ist es möglich, eine Verbindung zu einem Mobilfunknetz zu realisieren. Verfügt die Kommunikationseinrichtung 11 über diesen Anschluß 12, so läßt sich mit der Wähleinrichtung 8 eine entsprechende Verbindung zu einem anderen Teilnehmer, beispielsweise der Servicezentrale, herstellen. Folglich kann der Servicetechniker weitere Informationen per Sprachübertragung anfordern. Entsprechendes gilt, wenn die Kommunikationsverbindung über die Netzanschlußleitung sichergestellt wird. Selbstverständlich kann auch der Servicetechniker vor Ort angerufen werden. Eine entsprechende Meldung gibt dann die Rufsignalisierungseinrichtung 9 beispielsweise durch Klingelzeichen aus.

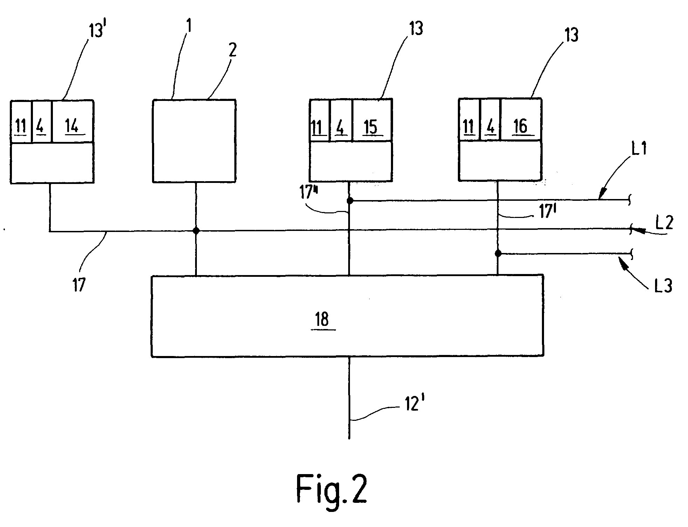

Die Figur 2 zeigt das Kopiergerät 2 in Vernetzung mit Haushaltsgeräten 13 und einem elektrischen Gerät 13', das bespielhaft eine Zentralheizung 14 darstellt, die wie das Bürogerät 1 die Steuereinrichtung 4 und die Kommunikationseinrichtung 11 aufweist. Ein weiteres Haushaltsgerät 13 ist eine Waschmaschine 15, der ebenfalls die Steuereinrichtung 4 und die Kommunikationseinrichtung 11 zugeordnet sind. Als ein weiteres Haushaltsgerät 13 wird rein beispielhaft ein multifunktionales Küchengerät 16 angenommen, beispielsweise ein Herd, ein Backofen oder ein Mikrowellengerät. Das Küchengerät 16 umfaßt ebenfalls die Steuereinrichtung 4 und die Kommunikationseinrichtung 11.

Die Haushaltsgeräte 13 und das Bürogerät 1 sind innerhalb eines Hauses an verschiedene Stromkreise L1, L2 beziehungsweise L3 angeschlossen. Die Anlage der Zentralheizung 14 sowie das Bürogerät 1 befinden sich in einem Stromkreis, nämlich in dem Stromkreis L2. Die Kommunikationsverbindung wird im Ausführungsbeispiel gemäß Figur 2 durch die Stromleitung 17 bereitgestellt. Es ist ohne weiteres ersichtlich, daß eine Kommunikationsverbindung dann jeweils nur in einem Stromkreis herstellbar ist. Um jedoch auch Geräte in anderen Stromkreisen ansprechen zu können, ist eine zentrale Steuereinheit 18 vorgesehen. Die Steuereinheit 18 ermöglicht es, daß eine Kommunikationsverbindung auch zwischen den Geräten, die in unterschiedlichen Stromkreisen angeschlossen sind, hergestellt werden kann. Dadurch wird es möglich, daß mit der Kommunikationseinrichtung 11, die dem Küchengerät 16 zugeordnet ist, über die Stromleitung 17' und über die Steuereinheit 18 eine Kommunikationsverbindung mit der Kommunikationseinrichtung 11 der Zentralheizung 14 möglich ist. Ohne weiteres ist ersichtlich, daß auch die Kommunikationseinrichtung 11, die der Waschmaschine 15 zugeordnet ist, über die Stromleitung 17'' angesprochen werden kann. Denkbar wäre es auch, die Steuereinheit 18 mit einer Kommunikationseinrichtung auszustatten.

Nach allem wird deutlich, daß sämtliche Büro- und Haushaltsgeräte 1 beziehungsweise 13 in Kommunikationsverbindung über die entsprechenden Kommunikationseinrichtungen 11 in Kommunikationsverbindung treten können. Selbstverständlich auch dann, wenn die Geräte jeweils in anderen Räumen eines Hauses untergebracht sind.

Alternativ kann vorgesehen sein, daß die Kommunikationseinrichtungen 11 per Funk oder durch eine separate Kommunikationsleitung mit der Steuereinheit 18 verbunden werden.

Ferner kann die Steuereinheit 18 Fernsteueraufgaben der einzelnen Geräte übernehmen, so daß von einem zentralen Ort des Hauses die angeschlossenen Geräte in Betrieb oder außer Betrieb genommen werden können. Alternativ oder zusätzlich kann vorgesehen sein, daß die Steuereinheit 18 eine Anzeigetafel (nicht dargestellt) aufweist, die bei einer entsprechenden Fehlfunktion eines Geräts eine Warnmeldung ausgibt.

Soll nun eine Kommunikationsverbindung außer Haus stattfinden, so ist die Steuereinheit 18 über einen Anschluß 12' an ein Telekommunikationsnetz angeschlossen. Wie bereits erwähnt, kann das Telekommunikationsnetz ein Drahtnetz oder ein Mobilfunknetz sein.

Eine derartige Vernetzung von verschiedensten Geräten auch innerhalb eines Haushalts, gewinnt mehr und mehr an Bedeutung, da die Bedienung einzelner Geräte bequem von einem zentralen Ort aus erfolgen soll. Diese auch als "intelligentes Heim" bezeichnete Ausführung ermöglicht es nicht nur, daß zwischen den technischen Einrichtungen Daten ausgetauscht werden können, vielmehr kann auch der Benutzer die Kommunikationsverbindungen für die Sprachübertragung verwenden.

## Patentansprüche

1. Elektrisches Gerät, vorzugweise Büro- oder Haushaltsgerät mit einer Steuereinrichtung zur Überwachung und/oder Fernsteuerung, **gekennzeichnet durch** ein Kommunikationsmodul (5) zur Sprachübertragung, das zumindest eine Sprech- und Höreinrichtung (7) aufweist.

2. Elektrisches Gerät nach Anspruch 1, **dadurch gekennzeichnet**, daß das Kommunikationsmodul (5) der Steuereinrichtung (4) zugeordnet ist.

3. Elektrisches Gerät nach einem der vorhergehenden Ansprüche, **dadurch gekennzeichnet**, daß das Kommunikationsmodul (5) eine Wähleinrichtung (8) mit Wahltastatur aufweist.

4. Elektrisches Gerät nach einem der vorhergehenden Ansprüche, **dadurch gekennzeichnet**, daß dem Kommunikationsmodul (5) eine Rufsignalisierungseinrichtung (9) zugeordnet ist.

5. Elektrisches Gerät nach einem der vorhergehenden Ansprüche, **dadurch gekennzeichnet**, daß als Wahltastatur eine bereits im Gerät vorhandene Eingabetastatur dient.

6. Elektrisches Gerät nach einem der vorhergehenden Ansprüche, **dadurch gekennzeichnet**, daß das Kommunikationsmodul (5) eine Bildübertragungseinrichtung (10) aufweist.

7. Elektrisches Gerät nach einem der vorhergehenden Ansprüche, **dadurch gekennzeichnet**, daß die Steuereinrichtung (4) mit einer übergeordneten zentralen Steuereinheit (18) in Kommunikationsverbindung steht.

8. Elektrisches Gerät nach einem der vorhergehenden Ansprüche, **dadurch gekennzeichnet**, daß die Kommunikationsverbindung über das Stromnetz (Stromleitung 17, 17', 17'') oder über eine Funkverbindung erfolgt.

9. Elektrisches Gerät nach einem der vorhergehenden Ansprüche, **dadurch gekennzeichnet**, daß die Steuereinrichtung (4) und/oder die zentrale Steuereinheit (18) an ein Telekommunikationsnetz angeschlossen sind.

10. Elektrisches Gerät nach Anspruch 9, **dadurch gekennzeichnet**, daß das Telekommunikationsnetz ein leitergebundes und/oder drahtloses Netz ist.
